# DEMANDE DE BREVET EUROPEEN

(11) **EP 1 927 861 A1**
(43) Date de publication de la demande: **04.06.2008**
(21) Numéro de dépôt: 07022739.2
(22) Date de dépôt: 23.11.2007
(51) Int. Cl.: G01P 13/00

(54) **Procédé et dispositif de détermination de l' état rotatif d'une roue d'un véhicule équipée d'un capteur actif de mouvement adapté pour délivrer un signal de sortie oscillatoire lors d'une rotation de la dite roue**

(30) Priorité: 01.12.2006 FR 0610510
(71) Demandeur: Siemens VDO Automotive, 31036 Toulouse Cedex 1 (FR)
(72) Inventeur: Dulac, Gilles, 31270 Villeneuve Tolosane (FR)

(57) **Abrégé**

L'invention concerne un procédé de détermination de l'état rotatif, immobile ou mobile en rotation, d'une roue de véhicule, selon lequel on analyse ponctuellement le signal délivré par un capteur actif de mouvement (Cp) équipant la roue selon une procédure consistant, en premier lieu, à un instant t1, à connecter le capteur de mouvement (Cp) à un circuit analogique (I1, 3) comportant au moins une capacité (3) et interposé entre le dit capteur de mouvement et une première entrée de moyens de comparaison électroniques (4), de façon à mémoriser dans la capacité (3) une valeur de référence V1 représentative de la valeur du signal à l'instant t1. Ensuite, on connecte le capteur de mouvement (Cp) à une seconde entrée des moyens de comparaison (4), de façon à comparer la valeur de référence V1 avec une valeur V2 représentative de la valeur du signal à un instant t2, et à délivrer un signal de diagnostic représentatif soit d'un état immobile en rotation de la roue lorsque V1 = V2, soit d'un état mobile en rotation de la roue lorsque V1 ≠V2.

## Description

L'invention concerne un procédé et un dispositif de détermination de l'état rotatif, immobile ou mobile en rotation, d'une roue d'un véhicule équipée d'un capteur actif de mouvement adapté pour délivrer un signal de sortie oscillatoire lors d'une rotation de la dite roue. A titre d'exemples de capteurs de mouvement visés spécifiquement par l'invention , on peut citer les capteurs de chocs, les capteurs magnétiques de détection des variations du champ magnétique terrestre, dits capteurs « EMF » (Earth Magnetic Field), ou les accéléromètres tangentiels.

De plus en plus de véhicules automobiles possèdent des systèmes de surveillance et/ou de mesure de paramètres comportant des capteurs montés sur le dit véhicule.

A titre d'exemple concernant de tels systèmes, il peut être cité les systèmes de surveillance comportant des capteurs équipant chacune des roues de véhicules, dédiés à la mesure de paramètres, tels que pression et/ou température des pneumatiques montés sur ces roues, et destinés à informer le conducteur de toute variation anormale du paramètre mesuré.

Ces systèmes de surveillance comportent classiquement :
- monté sur chacune des roues du véhicule, un boîtier électronique intégrant les capteurs de mesure, un microprocesseur, un émetteur radiofréquence, et une pile bouton,
- et, montée sur le véhicule, une unité centrale de réception des signaux émis par les boîtiers électroniques, dotée d'un calculateur intégrant un récepteur radiofréquence connecté à une antenne.

De plus, de façon usuelle, ces systèmes de surveillance comportent un capteur de déplacement adapté pour être intégré dans chaque boîtier électronique et destiné à fournir une information représentative de l'état rotatif, immobile ou mobile en rotation, de la roue, et donc représentative de l'état de déplacement du véhicule (arrêt ou roulage).

Une telle information permet, entre autres, d'instaurer deux modes de fonctionnement des systèmes de surveillance déterminant un état « de veille » et un état « réveillé » des boîtiers électroniques. Ces deux modes de fonctionnement se différencient notamment par la fréquence d'émission des signaux issus des boîtiers électroniques, et sont adaptés de façon que cette fréquence d'émission soit réduite lorsque les boîtiers électroniques sont dans un état « de veille » correspondant à l'état arrêté du véhicule.

Cette gestion de la fréquence d'émission des signaux émis par les boîtiers électroniques conduit, en effet, lorsque le véhicule est à l'arrêt, à réduire, d'une part, la consommation des piles alimentant les microprocesseurs embarqués, et d'autre part, la « pollution » du milieu environnant le véhicule, et par conséquent, notamment, les risques d'interférences parasites entre véhicules voisins.

La première famille de capteurs de déplacement classiquement utilisés aux fins précitées consiste en des capteurs du type accéléromètres dont le signal de sortie varie de façon linéaire en fonction de la vitesse de rotation de la roue.

Un avantage essentiel de tels capteurs réside dans le fait qu'ils s'avèrent conduire à de faibles consommations d'énergie électrique, qualité primordiale compte tenu des impératifs, notamment de durée de vie, auxquels doivent satisfaire les piles intégrés dans les boîtiers électroniques. En effet, la courbe de réponse de ces capteurs en fonction de la vitesse de rotation des roues étant linéaire, la détermination de l'état rotatif d'une roue impose simplement de fixer un seuil de roulage, et d'activer ponctuellement le capteur associé pendant un temps de faible durée, pour aboutir à la comparaison de la valeur du signal délivré avec le seuil de roulage.

Par contre, de tels capteurs présentent deux inconvénients majeurs résidant, d'une part, dans leur prix de revient élevé, et d'autre part, dans leur relative fragilité compte tenu des conditions d'exploitation.

La seconde famille de capteurs de déplacement classiquement utilisés en vue de la détermination de l'état rotatif des roues de véhicules consiste en des capteurs dont le signal de sortie présente une forme d'onde d'amplitude variable, par exemple sinusoïdale, et synchrone avec la vitesse de rotation de la roue. De tels capteurs, du type capteurs de chocs, capteurs magnétiques de détection des variations du champ magnétique terrestre, dits capteurs « EMF », accéléromètres tangentiels, s'avèrent d'un coût de revient inférieur et d'une robustesse supérieure par rapport à ceux des capteurs de la première famille ci-dessus énoncés.

Par contre, les solutions actuelles mises en oeuvre pour assurer le traitement du signal délivré par de tels capteurs en vue de la détermination de l'état rotatif d'une roue, s'avèrent entraîner d'importantes consommations d'énergie électrique.

La première solution, du type analogique, qui consiste à utiliser des systèmes d'amplificateurs et de comparateurs, impose, notamment pour des problèmes de valeur moyenne, d'hystérésis, ..., d'alimenter ces composants pendant une durée correspondant au temps nécessaire à la roue pour effectuer un tour à faible vitesse (détection du démarrage du véhicule). Or une telle durée s'avère très dommageable dans le cadre de l'utilisation d'une pile bouton.

La seconde solution, du type numérique, qui consiste à utiliser un système de conversion comportant un filtre et un convertisseur analogique/numérique, impose un temps d'établissement équivalent à celui de la solution analogique, donc également très dommageable dans le cadre de l'application visée par l'invention.

La présente invention vise à pallier cet inconvénient de consommation électrique lié à l'utilisation de capteurs dont le signal de sortie présente une forme d'onde d'amplitude variable, et a pour principal objectif de fournir une solution conduisant à une réduction notable de la consommation générée par de tels capteurs lors d'une procédure de détermination de l'état rotatif de roues de véhicules.

A cet effet, l'invention vise, en premier lieu, un procédé de détermination de l'état rotatif, immobile ou mobile en rotation, d'une roue de véhicule, selon lequel on équipe la roue d'un capteur actif de mouvement adapté pour délivrer un signal de sortie oscillatoire lors d'une rotation de la dite roue, et on analyse ponctuellement le dit signal de sortie de façon à déduire de sa forme l'état rotatif de la roue.

Selon l'invention, chaque analyse ponctuelle du signal de sortie délivré par le capteur de mouvement consiste :
- A) en premier lieu, à un instant t1, à connecter le capteur de mouvement à un circuit analogique, dit circuit de mémorisation, comportant au moins une capacité, et interposé entre le dit capteur de mouvement et une première entrée de moyens de comparaison électroniques, et à alimenter électriquement le capteur de mouvement de façon à mémoriser dans la capacité une valeur V1, dite valeur de référence, représentative de la valeur du signal de sortie délivré par le capteur de mouvement à l'instant t1,
- puis B), à au moins un instant t2 = t1 + Δt, avec Δt laps de temps prédéterminé, à connecter le capteur de mouvement à une seconde entrée des moyens de comparaison, et à alimenter électriquement les dits capteur de mouvement et moyens de comparaison, de façon à comparer la valeur de référence V1 avec une valeur V2 représentative de la valeur du signal de sortie délivré par le capteur de mouvement à l'instant t2, et à délivrer un signal de diagnostic représentatif :
   - d'un état immobile en rotation de la roue lorsque V1 = V2,
   - d'un état mobile en rotation de la roue lorsque V1 ≠V2.

En premier lieu selon l'invention, on entend définir par « capteur actif » un capteur adapté pour délivrer un signal exploitable, c'est-à-dire, de façon usuelle, un capteur comportant une cellule de mesure et des moyens d'amplification du signal délivré par cette cellule de mesure.

De plus, de façon usuelle, l'égalité « V1 = V2 » entend définir, outre une égalité parfaite, une égalité incorporant les tolérances classiques liées aux diverses dispersions des mesures...

L'invention réside donc dans une solution de type analogique consistant à mémoriser des valeurs de référence dans une capacité, puis à comparer ces valeurs de référence avec des valeurs mesurées ultérieurement, de façon à déduire directement de ces comparaisons l'état rotatif de la roue, par application du principe suivant lié à la forme du signal délivré par les capteurs :
- en l'absence de rotation de la roue, le signal délivré par le capteur ne subit pas de variations, de sorte que la comparaison de valeurs effectuée selon le procédé de l'invention débouche sur une égalité des valeurs comparées,
- lors d'une rotation de la roue, le signal délivré par le capteur consiste en un signal oscillatoire, de sorte que deux valeurs mesurées successivement s'avèrent différentes.

Par conséquent, une procédure de détermination de l'état rotatif d'une roue impose simplement :
- d'alimenter ponctuellement le capteur en vue d'acquérir les valeurs V1 et V2,
- et d'alimenter ponctuellement les moyens de comparaison en vue de la comparaison des valeurs V1 et V2 et de la transmission du signal de diagnostic.

Un tel principe conduit ainsi à diminuer de façon optimale la consommation d'énergie électrique générée par des capteurs adaptés pour délivrer un signal de sortie oscillatoire, lors d'une procédure de détermination de l'état rotatif de roues de véhicules.

A titre d'exemple comparatif, visant deux installations ayant des objectifs équivalents :
- un système actuel du type numérique génère une consommation de l'ordre de 12 mA pendant 1 ms,
- un système selon l'invention génère une consommation inférieure à 0.4 mA pendant 1 ms.

Selon un mode de réalisation avantageux de l'invention, chaque analyse ponctuelle du signal de sortie délivré par le capteur de mouvement consiste à mémoriser une valeur de référence V1, puis à répéter successivement n fois l'étape (B), avec n > 1.

Cette disposition permet de réduire la consommation d'énergie du fait qu'elle conduit à réduire le nombre de mesures de la valeur de référence. De plus, elle permet de réaliser des stratégies différentes basées sur des valeurs différentes de la variable « n », en vue de se prémunir contre des mesures parasites résultant par exemple de perturbations électromagnétiques...

L'invention s'étend à un dispositif de détermination de l'état rotatif, immobile ou mobile en rotation, d'une roue de véhicule équipée d'un capteur actif de mouvement adapté pour délivrer un signal de sortie oscillatoire lors d'une rotation de la dite roue. Selon l'invention, ce dispositif comprend :
- un circuit analogique, dit circuit de mémorisation, relié au capteur de mouvement, et comportant un interrupteur et au moins une capacité,
- des moyens de comparaison électroniques comportant une première entrée reliée au circuit de mémorisaton, et une seconde entrée reliée au capteur de mouvement avec interposition, entre ce dernier et la dite seconde entrée, d'un interrupteur,
- des organes de connexion électrique du capteur de mouvement, des interrupteurs et des moyens de comparaison à une source de courant,
- et une unité de gestion programmée pour commander des analyses ponctuelles du signal de sortie délivré par le capteur de mouvement, au cours de chacune desquelles :
   - en premier lieu, à un instant t1, elle commande la fermeture de l'interrupteur du circuit de mémorisation et l'alimentation électrique du capteur de mouvement, de façon à mémoriser dans la capacité une valeur V1, dite valeur de référence, représentative de la valeur du signal de sortie délivré par le capteur de mouvement à l'instant t1,
   - puis, à au moins un instant t2 = t1 + Δt, avec Δt laps de temps prédéterminé, elle commande la fermeture de l'interrupteur interposé entre le capteur de mouvement et la seconde entrée des moyens de comparaison, et l'alimentation électrique du dit capteur de mouvement et des dits moyens de comparaison, de façon à comparer la valeur de référence V1 avec une valeur V2 représentative de la valeur du signal de sortie délivré par le capteur de mouvement à l'instant t2, et à obtenir en sortie des moyens de comparaison un signal de diagnostic représentatif :
      * d'un état immobile en rotation de la roue lorsque V1 = V2,
      * d'un état mobile en rotation de la roue lorsque V1 ≠V2.

De plus, de façon avantageuse, les organes de connexion électrique comprennent un premier commutateur de commande de l'alimentation électrique du capteur de mouvement et des interrupteurs, et un second commutateur de commande de l'alimentation électrique des moyens de comparaison.

Cette disposition qui prévoit une alimentation indépendante des moyens de comparaison permet d'optimiser la consommation électrique globale.

Par ailleurs, les moyens de comparaison comprennent avantageusement deux comparateurs de détection respectivement des variations (V1 - V2) > 0 et (V1 - V2) < 0.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- la figure 1 est un schéma fonctionnel d'un dispositif selon l'invention de détermination de l'état rotatif d'une roue,
- les figures 2a à 2d sont des graphiques sur lesquels sont représentés les divers signaux de commande (figures 2a et 2b), et les signaux de sortie correspondants (figures 2c et 2d),
- les figures 3a à 3d sont des graphiques représentant un relevé de mesures correspondant à un état immobile en rotation d'une roue,
- et les figures 4a à 4d sont des graphiques représentant un relevé de mesures correspondant à un état mobile en rotation d'une roue.

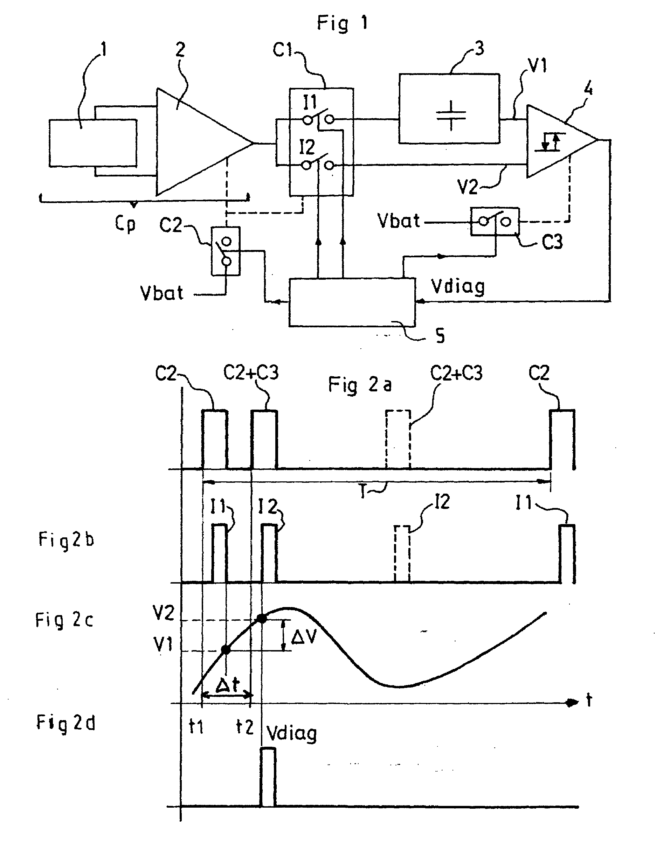

Le dispositif selon l'invention représenté à titre d'exemple à la figure 1 consiste en un dispositif de détermination de l'état rotatif, immobile ou mobile en rotation, d'une roue de véhicule, comportant un capteur actif de mouvement Cp constitué d'une cellule de mesure 1 et d'un amplificateur 2, adapté pour délivrer un signal de sortie oscillatoire lors d'une rotation de la dite roue.

Ce dispositif de détermination comprend, en outre, selon l'invention :
- un commutateur C1 incorporant deux interrupteurs I1 et I2 connectés en parallèle en sortie de l'amplificateur 2 du capteur de mouvement Cp,
- une capacité 3 montée en série avec l'interrupteur I1, de façon à former avec ce dernier un circuit dit de mémorisation d'une tension de référence V1,
- des moyens de comparaison électroniques 4 comportant une première entrée reliée à la capacité 3, une seconde entrée reliée à l'interrupteur 12, et une sortie reliée à une unité de calcul à microprocesseur 5,
- un commutateur C2 de connexion électrique du capteur de mouvement Cp et du commutateur C1 à une source de courant (non représentée) délivrant une tension Vbat,
- et un commutateur C3 de connexion électrique des moyens de comparaison 4 à la source de courant.

De plus, les moyens de comparaison sont adaptés pour délivrer, de façon classique, un signal Vdiag représentatif soit d'une égalité entre les valeurs des tensions au niveau de la première et de la seconde entrée (en l'exemple Vdiag = 0), soit d'une différence positive ou négative entre ces deux valeurs de tension (en l'exemple Vdiag = 1). A cet effet, ces moyens de comparaison 4 peuvent consister en deux comparateurs dédiés, respectivement, l'un aux différences positives et l'autre aux différences négatives.

Enfin, l'unité de calcul 5 est reliée aux interrupteurs du commutateur C1, et aux commutateurs C2 et C3, de façon à commander les changements d'état des dits interrupteurs et commutateurs.

Selon l'invention, cette unité de calcul est, par ailleurs, programmée pour instaurer une procédure d'analyse des signaux délivrés par le capteur de mouvement Cp, consistant chronologiquement, avec une période de scrutation prédéterminée T, et tel que représenté aux figures 2a, 2b et 2d illustrant l'analyse d'un signal représenté à la figure 2c, obtenu avec une roue rotative :
- 1/ à un premier instant t1, d'une part, à commander la fermeture du commutateur C2 (figure 2a) de façon à alimenter le capteur de mouvement Cp et le commutateur C1, et d'autre part, à commander la fermeture de l'interrupteur I1 (figure 2b) de façon à mémoriser dans la capacité 3 une tension de référence V1 (figure 2c), représentative de la valeur du signal de sortie délivré par le capteur de mouvement Cp à l'instant t1,
- 2/ à commander l'ouverture du commutateur C2 à un instant t1 +ε,
- 3/ à un instant t2 = t1 + Δt, avec Δt laps de temps prédéterminé de l'ordre de quelques dizaines de millisecondes et tel que Δt >> ε, d'une part, à commander la fermeture des commutateurs C2 et C3 (figure 2a) de façon à alimenter le capteur de mouvement Cp, le commutateur C1 et les moyens de comparaison 4, et d'autre part, à commander la fermeture de l'interrupteur 12 (figure 2b), de façon à comparer la tension de référence V1 avec une tension V2 (figure 2c) représentative de la valeur du signal de sortie délivré par le capteur de mouvement Cp à l'instant t2, et à obtenir la délivrance, à destination de l'unité de calcul 5, d'un signal de diagnostic Vdiag (figure 2d) représentatif :
   - d'un état immobile en rotation de la roue lorsque V1 = V2,
   - d'un état mobile en rotation de la roue lorsque V1 ≠V2,
- 4/ à commander l'ouverture des commutateurs C2 et C3 à un instant t2 +ε,
- 5/ et à débuter une nouvelle procédure d'analyse à un instant t1 + T (figure 2a).

Il est à noter, en outre, tel que représenté en pointillé aux figures 2a et 2b, que les étapes 3/ et 4/ peuvent être effectuées n fois (en l'exemple représenté deux fois)), durant une même période de scrutation.

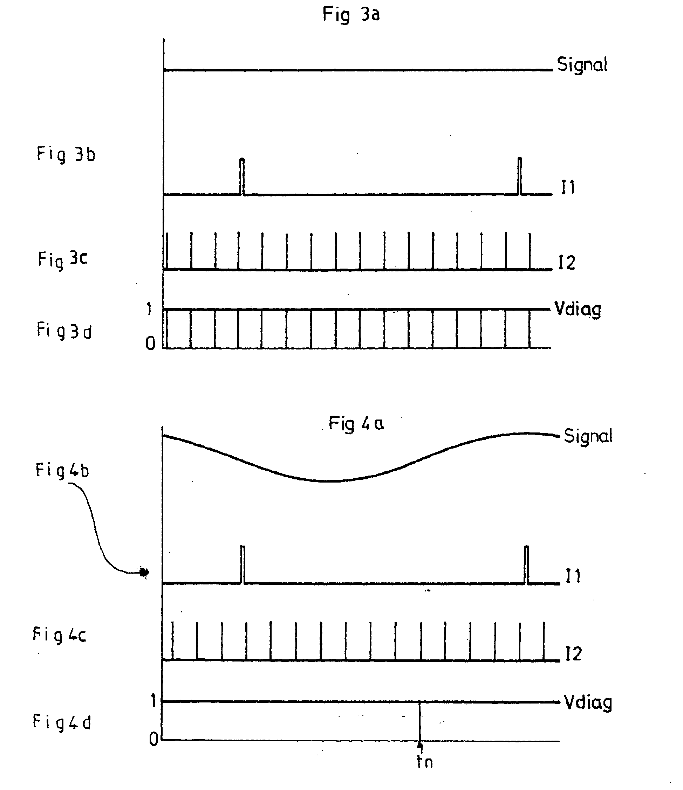

Ces étapes sont également partiellement illustrées sur les figures 3a à 3d et 4a à 4d qui représentent une procédure selon laquelle n mesures de « V2 », (n = 11 en l'exemple), déclenchées chacune par la fermeture de l'interrupteur I2 (figures 3c et 4c), sont effectuées entre deux mesures de « V 1 » déclenchées quant à elles, chacune par la fermeture de l'interrupteur 11 (figures 3b et 4b)

Selon la figure 3a, le signal en sortie du capteur de mouvement Cp présente une valeur constante représentative d'un état immobile en rotation de la roue, et lors de chaque mesure d'une tension V2 (étapes 3/ et 4/ et figure 3c), le signal Vdiag délivré vers l'unité de calcul 5 présente une valeur nulle du fait que V1 = V2 (figure 3d).

Selon la figure 4a, le signal en sortie du capteur de mouvement Cp présente une forme sinusoïdale représentative d'un état mobile en rotation de la roue, et lors de chaque mesure d'une tension V2 (étapes 3/ et 4/ et figure 4c), le signal Vdiag délivré vers l'unité de calcul 5 présente une valeur égale à 1 du fait que V1 ≠V2 (figure 4d). Il est à noter toutefois que, tel que représenté à la figure 4d, compte tenu de la forme sinusoïdale du signal, une des valeurs V2, en l'exemple mesurée à un instant tn, peut être égale à V1 entraînant ponctuellement l'émission d'un signal Vdiag = 0, facilement discriminable.

Le dispositif selon l'invention ne sollicite donc la source de courant que pendant de brèves périodes (n fois « ε ») durant une période de scrutation T, et conduit donc à réduire de façon optimisée la consommation de courant nécessaire à la détermination de l'état rotatif d'une roue de véhicule.

## Revendications

1. Procédé de détermination de l'état rotatif, immobile ou mobile en rotation, d'une roue de véhicule, selon lequel on équipe la roue d'un capteur actif de mouvement (Cp) adapté pour délivrer un signal de sortie oscillatoire lors d'une rotation de la dite roue, et on analyse ponctuellement le dit signal de sortie de façon à déduire de sa forme l'état rotatif de la roue, le dit procédé de détermination étant **caractérisé en ce que** chaque analyse ponctuelle du signal de sortie délivré par le capteur de mouvement (Cp) consiste :
• A) en premier lieu, à un instant t1, à connecter le capteur de mouvement (Cp) à un circuit analogique (I1, 3), dit circuit de mémorisation, comportant au moins une capacité (3), et interposé entre le dit capteur de mouvement et une première entrée de moyens de comparaison électroniques (4), et à alimenter électriquement le capteur de mouvement (Cp) de façon à mémoriser dans la capacité (3) une valeur V1, dite valeur de référence, représentative de la valeur du signal de sortie délivré par le capteur de mouvement (Cp) à l'instant t1,
• puis B), à au moins un instant t2 = t1 + Δt, avec Δt laps de temps prédéterminé, à connecter le capteur de mouvement (Cp) à une seconde entrée des moyens de comparaison (4), et à alimenter électriquement les dits capteur de mouvement et moyens de comparaison, de façon à comparer la valeur de référence V1 avec une valeur V2 représentative de la valeur du signal de sortie délivré par le capteur de mouvement (Cp) à l'instant t2, et à délivrer un signal de diagnostic représentatif :
- d'un état immobile en rotation de la roue lorsque V1 = V2,
- d'un état mobile en rotation de la roue lorsque V1 #V2.

2. Procédé de détermination selon la revendication 1 **caractérisé en ce que** chaque analyse ponctuelle du signal de sortie délivré par le capteur de mouvement (Cp) consiste à mémoriser une valeur de référence V1, puis à répéter successivement n fois l'étape (B), avec n > 1.

3. Dispositif de détermination de l'état rotatif, immobile ou mobile en rotation, d'une roue de véhicule équipée d'un capteur actif de mouvement (Cp) adapté pour délivrer un signal de sortie oscillatoire lors d'une rotation de la dite roue, **caractérisé en ce qu'**il comprend :
• un circuit analogique (l1, 3), dit circuit de mémorisation, relié au capteur de mouvement (Cp), et comportant un interrupteur (I1) et au moins une capacité (3),
• des moyens de comparaison électroniques (4) comportant une première entrée reliée au circuit de mémorisation (I1, 3), et une seconde entrée reliée au capteur de mouvement (Cp) avec interposition, entre ce dernier et la dite seconde entrée, d'un interrupteur (I2),
• des organes de connexion électrique (C2, C3) du capteur de mouvement (Cp), des interrupteurs (I1, I2) et des moyens de comparaison (4) à une source de courant,
• et une unité de gestion (5) programmée pour commander des analyses ponctuelles du signal de sortie délivré par le capteur de mouvement (Cp), au cours de chacune desquelles :
- en premier lieu, à un instant t1, elle commande la fermeture de l'interrupteur (I1) du circuit de mémorisation (I1, 3) et l'alimentation électrique du capteur de mouvement (Cp), de façon à mémoriser dans la capacité (3) une valeur V1, dite valeur de référence, représentative de la valeur du signal de sortie délivré par le capteur de mouvement (Cp) à l'instant t1,
- puis, à au moins un instant t2 = t1 + Δt, avec Δt laps de temps prédéterminé, elle commande la fermeture de l'interrupteur (12) interposé entre le capteur de mouvement (Cp) et la seconde entrée des moyens de comparaison (4), et l'alimentation électrique du dit capteur de mouvement et des dits moyens de comparaison, de façon à comparer la valeur de référence V1 avec une valeur V2 représentative de la valeur du signal de sortie délivré par le capteur de mouvement (Cp) à l'instant t2, et à obtenir en sortie des moyens de comparaison (4) un signal de diagnostic représentatif :
* d'un état immobile en rotation de la roue lorsque V1 = V2,
* d'un état mobile en rotation de la roue lorsque V1 ≠V2.

4. Dispositif de détermination selon la revendication 3 **caractérisé en ce que** les organes de connexion électrique comprennent un premier commutateur (C2) de commande de l'alimentation électrique du capteur de mouvement (Cp) et des interrupteurs (I1, I2), et un second commutateur (C3) de commande de l'alimentation électrique des moyens de comparaison (4).

5. Dispositif de détermination selon l'une des revendications 3 ou 4 **caractérisé en ce que** les moyens de comparaison (4) comprennent deux comparateurs de détection, respectivement, des variations (V1 - V2) > 0 et (V1 - V2) < 0.
